# EUROPEAN PATENT APPLICATION

(11) **EP 3 222 155 A1**
(43) Date of publication of application: **27.09.2017**
(21) Application number: 17162232.7
(22) Date of filing: 22.03.2017
(51) Int. Cl.: A23L 3/54, F26B 3/30, F26B 9/00, F26B 9/06

(54) **FOODSTUFF DEHYDRATOR**

(30) Priority: 22.03.2016 ES 201630359
(71) Applicant: Sánchez Távora, Eugenio José, 41020 Sevilla (ES)
(72) Inventor: Sánchez Távora, Eugenio José, 41020 Sevilla (ES)
(74) Representative: Pons Ariño, Angel

(57) **Abstract**

A foodstuff dehydrator that eliminates non-structural water from foodstuffs inserted therein to improve the preservation thereof over time. Said elimination takes place by means of the combined action of the effects of electromagnetic energy from the far infrared band with convection currents, either natural or forced, created by increasing the temperature of said foodstuffs, it being possible to obtain and control different temperature ranges in the same machine depending on the needs of each type of foodstuff.

## Description

### OBJECT OF THE INVENTION

The present invention falls under the technical field of food preservation, specifically preservation based on drying by means of heating through irradiation, as well as on drying procedures for solid materials or objects without using heat, and in particular it relates to a device for the preservation of foodstuffs by means of dehydration, based on applying electromagnetic energy from the far infrared band.

### BACKGROUND OF THE INVENTION

The need to manipulate the state of foodstuffs to prevent or slow the decay thereof has been known for a long time, decay being understood as a decrease in quality, edibility and/or nutritional properties.

Among the different techniques for preserving foodstuffs, drying or dehydration is based on the elimination of non-structural water contained in the foodstuff in order to prevent the proliferation of the microorganisms, mainly fungi and bacteria, which cause the degradation thereof. In primitive times, said dehydration was achieved by simply leaving the foodstuff, usually meat, in the sun for it to dry.

Salt was later used, leading to processes generally known as salting, which, in addition to partially dehydrating the foodstuff, in this case usually meat or fish, provides more flavor and prevents certain bacteria from forming.

The development of this technique means that today the systems used for dehydration have been grouped into a series of techniques, the first of which comprises the traditional procedures of natural air-drying, which, as was mentioned previously, mainly consists of leaving the foodstuff out in the sun or in compartments prepared for this purpose, in which the foodstuff is dehydrated by the action of the wind. Said natural drying method can only be done in certain seasons and in geographical areas that are suitable, and furthermore it requires a relatively large outdoor space and a significant amount of manpower. Moreover, this process could lead to possible health problems due to contamination caused by dust and bacilli found in the air, as well as the risk of altering the flavor of the products due to oxidation. Natural drying is, therefore, a slow, laborious and unsafe procedure for obtaining a positive final result.

The second group comprises convective dehydration techniques, in which the foodstuff is subjected to a hot air current in order to force the dehydration thereof, and the third consists of techniques of freeze-drying, in which the product is frozen and then placed in a vacuum chamber in which water is eliminated through sublimation. In this way, water is eliminated by passing directly from a solid state to a gaseous state without passing through the liquid state.

Furthermore, infrared radiation is a type of electromagnetic and thermal radiation with a longer wavelength and frequency than visible light which is emitted by any body with a temperature greater than 0 Kelvin, that is, -273.15 degrees Celsius (absolute zero). Far infrared is the type of electromagnetic radiation from the infrared band that has longer wavelengths and is located between medium infrared and radio waves. It is not visible to the naked eye, and it is necessary to use special filters and lenses to be able to see it. Far infrared waves transmit heat by making contact with an object, and also have the ability to penetrate the surface of almost all organic materials.

### DESCRIPTION OF THE INVENTION

The object of the invention consists of a foodstuff dehydrator which combines the effects of electromagnetic energy from the far infrared band with convection currents created by the increased temperatures of said foodstuffs, it being possible to obtain and control different temperature ranges in the same machine depending on the needs of each type of foodstuff.

To this end, the foodstuff dehydrator comprises a plurality of far infrared emitters, mounted on the inside of an essentially parallelepiped-shaped frame, arranged above and corresponding to a plurality of horizontal trays which contain the foodstuffs. Defined on the entire surface of each containing tray is a plurality of through perforations or holes to facilitate the passage therethrough of convection currents created inside the frame due to the increase in temperature.

Each of the emitter-tray sets is separated from the other at a fixed distance, which in a preferred embodiment adapted for the case of fruit is 6 centimeters, and depending on the product, may be up to 1 meter, such as in the case of hops. Furthermore, each set is controlled by an adjustable thermostat, such that the optimum dehydration temperature for different food products may be obtained and controlled in the same machine such that said dehydration process may be optimized without altering the organoleptic properties thereof.

The option of incorporating a system of forced ventilation to accelerate the dehydration process is envisaged. In this case, an extractor fan is placed in the top portion of the machine, such that the passage of air through the perforations of the trays is accelerated, thereby accelerating the dehydration process.

The application of electromagnetic energy in the far infrared band causes the molecular activation of the foodstuff and the resulting temperature increase, causing the elimination of non-structural water contained therein. By means of combining said energy with convection, the temperature of the dehydration can be controlled for each emitter-tray set.

The main advantages of dehydration by means of far infrared radiation lie, on the one hand, in the unaltered preservation of the organoleptic properties of foodstuffs, maintaining even the aroma and, on the other hand, in the reduction of the costs of carrying out the dehydration process, since practically the entire amount of energy emitted is focused on dehydrating the foodstuffs, without causing significant energy loss.

### DESCRIPTION OF THE FIGURES

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1. - Shows a perspective view of the dehydrator with the access door open, in which its main constituting elements can be seen according to a second preferred embodiment which incorporates forced ventilation.
Figure 2. - Shows a side view of the control area of the dehydrator, according to a first preferred embodiment.
Figure 3. - Shows a front view of the dehydrator, according to a first preferred embodiment.
Figure 4. -Shows a lower perspective view of an infrared emitter used in the dehydrator.

### PREFERRED EMBODIMENT OF THE INVENTION

What follows is a detailed description, with the help of the figures referenced above, of a first preferred embodiment of the object of the present invention.

The foodstuff dehydrator described herein is made up of a frame (1), with essentially a parallelepiped shape, which comprises two side walls (2) connected together at the upper ends thereof by a ceiling (3), which closes the upper portion of the frame (1).

Arranged in the inner space of the frame (1), transversal with respect to the inner face of the opposing walls (2), is a plurality of horizontal rails (4), separated from one another at a predetermined distance, through each of which a mobile tray (5) slides, which is intended to contain the foodstuffs to be dried. Each tray (5) comprises a plurality of through perforations (6) defined on the surface thereof in order to enable the passage of a hot air current therethrough.

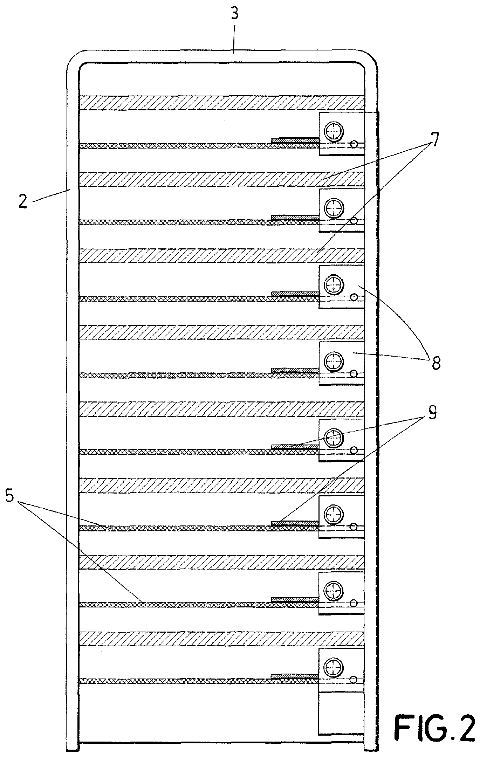

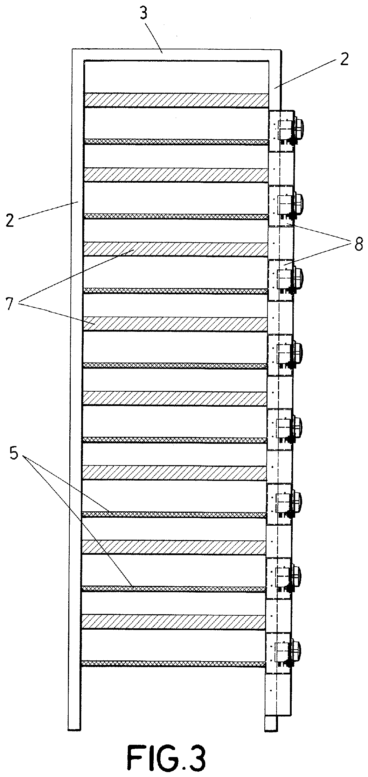

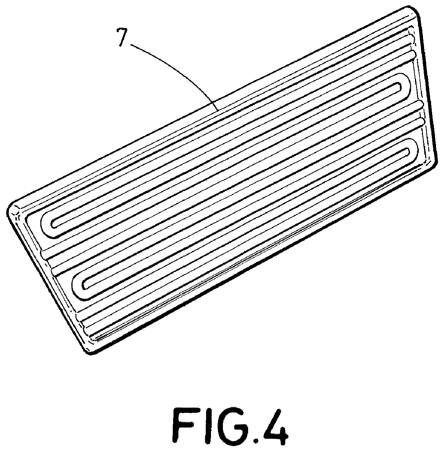

Corresponding to each tray (5) is a detachable electromagnetic energy emitter (7) in the far infrared band, as shown in figure 4. Each emitter (7) is arranged on a plane above its corresponding tray (5), as shown in figures 2 and 3, both elements being separated from one another at a predetermined distance which in the first preferred embodiment described herein is 6 centimeters. Likewise, it is envisaged that the surface of the emitter (7) is essentially similar to that of the corresponding tray (5), such that the entire surface of said tray (5) receives the entirety of the irradiation from the emitter (7).

The electromagnetic energy from each emitter (7) perpendicularly hits the foodstuffs contained in the tray (5), located below said emitter (7), irradiating said foodstuffs such that it causes the temperature thereof to rise in order to eliminate the non-structural liquid thereof and thus improve the preservation of said foodstuff.

Each one of the tray (5) - emitter (7) sets contained in the frame (1) additionally comprises a programmable thermostat (8) and is connected to the emitter (7) which regulates the temperature of the foodstuffs contained in the tray (5). To this end, depending on the data received by the probe (9) located on the corresponding tray (5), the thermostat (8) is capable of sending a signal to regulate the amount of infrared electromagnetic energy emitted by the emitter (7) such that a specific temperature is not exceeded in the tray (5).

In this way, and depending on the needs of each type of foodstuff introduced in the dehydrator, different emission intensities may be established in the emitter (7), and as a result, different drying temperatures may be obtained for each one of the tray (5) - emitter (7) sets.

Additionally, the increase in the temperature produced in the foodstuffs, due to the irradiation to which they are subjected, leads to the creation of a convection current inside the frame (1). Said current, which is generally circular, passes through the perforations (6) of each tray (5), both in an ascending and descending direction, contributing to the dehydration process of the foodstuffs contained in said trays (5). In the first preferred embodiment, said convection circulates through the inside of the frame (1) in a natural way.

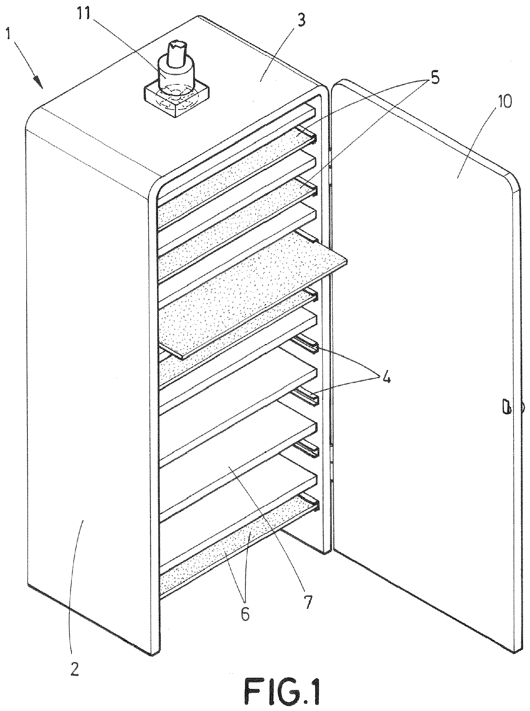

According to a second preferred embodiment, as shown in figure 1, the frame (1) of the dehydrator additionally incorporates a rear wall and a front door (10), through which it is easy to access the inner space of the frame (1), as well as an air extraction fan (11), preferably located on the ceiling (3) of the frame (1) thus defined.

The extraction fan (11) produces a suction current of the air contained inside the frame (1), which in turn causes the convection current to circulate in an ascending direction towards the upper portion of the frame (1), passing through the trays (5) via the perforations (6) thereof, and thus accelerating the drying process of the foodstuffs contained therein.

Said air current enters the air extraction fan (11) located on the ceiling (3) from the lower end of the frame (1), where a particle filter is additionally installed, not shown in the attached figures, in order to prevent foreign elements from entering.

The food dehydrator as described eliminates non-structural water of foodstuffs placed inside of it by means of a combination of electromagnetic radiation from the far infrared band and convection currents, either natural or forced, in order to improve the preservation of said foodstuffs over time.

## Claims

1. A foodstuff dehydrator to facilitate the preservation of said foodstuffs by eliminating non-structural liquid from the content thereof, comprising a frame (1) with essentially a parallelepiped shape, made up of walls (2) and a ceiling (3) connected together, **characterized in that**, in the inner space of the frame (1), the dehydrator comprises:
- a plurality of horizontal rails (4) connected to the inner face of two opposing walls (2),
- a plurality of mobile trays (5), intended to contain the foodstuffs to be dehydrated, which move through the inside the rails (4), each one of said trays (5) defining a plurality of through perforations (6) in order to enable the passage of an air current therethrough.
- a plurality of electromagnetic energy emitters (7) in the far infrared band, arranged above and corresponding to each of the trays (5), intended to emit a radiation that perpendicularly hits the foodstuffs contained in the tray (5) immediately below, and
- a plurality of programmable thermostats (8) connected to each one of the emitters (7), which regulates the amount of energy produced by said emitters (7) depending on the temperature of the trays (5) and on the foodstuffs contained therein, said temperature being measured by a plurality of probes (9).

2. The foodstuff dehydrator according to claim 1, **characterized in that** the frame (1) additionally incorporates a rear wall and a door (10) for accessing the inside of said frame (1).

3. The foodstuff dehydrator according to claim 2, **characterized in that** it additionally incorporates an air extraction fan (11) in order to produce an air suction current contained in the inner space of the frame (1).

4. The foodstuff dehydrator according to claim 3, **characterized in that** the air extraction fan (11) is arranged on the ceiling (3) of the frame (1) in order to create an ascending air current inside said frame (1).
